Europäisches Patentamt

European Patent Office

Office européen des brevets

(19)

(11) Veröffentlichungsnummer: **0 503 360 A1**

## (12) EUROPÄISCHE PATENTANMELDUNG

(21) Anmeldenummer: **92103205.8**

(22) Anmeldetag: **26.02.92**

(51) Int. Cl.5: **F24F 11/04**

(30) Priorität: **08.03.91 DE 4107481**

(43) Veröffentlichungstag der Anmeldung:
**16.09.92 Patentblatt 92/38**

(84) Benannte Vertragsstaaten:
**AT DE ES FR NL**

(71) Anmelder: **AL-KO THERM GmbH Maschinenfabrik**

**W-8876 Jettingen-Scheppach(DE)**

(72) Erfinder: **Veitenhansl, Horst**

Sankt-Sixtus-Strasse 3
**W-8870 Günzburg(DE)**
Erfinder: **Braun, Wolfgang**
**Rosenstrasse 17**
**W-8883 Gundelfingen(DE)**
Erfinder: **Kammerer, Franz, Dipl.-Ing. (FH)**
**Steigstrasse 26**
**W-8909 Münsterhausen(DE)**

(74) Vertreter: **Munk, Ludwig, Dipl.-Ing.**
**Patentanwalt Prinzregentenstrasse 1**
**W-8900 Augsburg(DE)**

(54) **Raumlufttechnische Anlage.**

(57) Bei einer raumlufttechnischen Anlage mit wenigstens einem einen Ventilator (2) und eine dessen Saug- und Druckseite voneinander trennende Druckwand (8) aufweisenden Ventilatorteil (1) und mit im Bereich beider Seiten der Druckwand (8) vorgesehenen Druckfühlern (14, 15), die an eine Manometereinrichtung (16) angeschlossen sind, läßt sich dadurch eine einfache und genaue Regelung einer Betriebsgröße erreichen, daß die Manometereinrichtung (16) mit einem Meßwerteingang (19) einer mit mehreren Meßwerteingängen (19, 20, 22, 24, 26), von denen zumindest einer mit einem Temperaturfühler (28) und einer mit einem Atmosphärendruckfühler (25) verbunden sind, versehenen Recheneinrichtung (17) verbunden ist, mittels welcher aus den einspeisbaren Maßwerten ein Ist-Wert ermittelbar, dieser mit einem vorgebbaren Soll-Wert vergleichbar und aus der Abweichung ein Stellwert ermittelbar ist, der an einem mit einem der Ventilator-Antriebseinrichtung zugeordneten Drehzahlsteller (33) verbundenen Stellwert-Ausgang (32) anliegt.

Die Erfindung betrifft eine raumlufttechnische Anlage mit wenigstens einem einen Ventilator und eine dessen Saug- und Druckseite voneinander trennende Druckwand aufweisenden Ventilatorteil und mit im Bereich beider Seiten der Druckwand vorgesehenen Druckfühlern, die an eine Manometereinrichtung angeschlossen sind.

Eine raumlufttechnische Anlage dieser Art ist aus der DE 38 03 376 A1 bekannt. Bei dieser bekannten Anordnung ist die Manometereinrichtung mit einer Überwachungseinrichtung verbunden, die lediglich eine Überwachung des Betriebszustands, d. h. eine Feststellung des Ist-Zustands, ermöglicht. Die Regelung einer Betriebsgröße ist hierbei nicht möglich. Es ist jedoch oft erwünscht, bei der Versorgung von Räumen mit Luft vorgegebene Bedingungen über einen längeren Zeitraum möglichst konstant zu erfüllen.

Zur Regelung des Volumenstroms einer raumlufttechnischen Anlage existieren zwar bereits Regeleinrichtungen. Diese verwenden jedoch in den Strömungskanälen angeordnete, vom Ventilatorteil entfernte Druckfühler. Diese externen Druckfühler müssen dabei als Staugitter ausgebildet sein, die nicht nur einen statischen Druck, sondern auch einen dynamischen Druck aufnehmen, was sich ungünstig auf die erzielbare Genauigkeit auswirkt und zudem zu nicht vermeidbaren Energieverlusten führt. Hinzu kommt der erhebliche Aufwand, der sich aufgrund der externen Anordnung der Druckfühler ergeben kann. In diesem Zusammenhang ist davon auszugehen, daß Eingriffe in das Gebäude zur Verlegung der Signalleitungen und zur Anbringung der Druckfühler nicht vermeidbar sind. Ein weiterer Nachteil ist darin zu sehen, daß hier für jede Anlage eine individuelle Festlegung der Meßstellen und damit verbunden des Regelverhaltens erforderlich ist.

Hiervon ausgehend ist es daher die Aufgabe der vorliegenden Erfindung, eine Vorrichtung eingangs erwähnter Art mit einfachen und kostengünstigen Mitteln so zu verbessern, daß auch hierbei eine Regelung einer gewünschten Betriebsgröße, vorzugsweise des Volumenstroms, möglich ist und daß auch dabei die mit den gattungsgemäßen Druckfühlern verbundenen, grundsätzlichen Vorteile zum Tragen kommen.

Diese Aufgabe wird erfindungsgemäß dadurch gelöst, daß die Manometereinrichtung mit einem Meßwerteingang einer mit mehreren Meßwerteingängen, von denen zumindest einer mit einem Temperaturfühler und ein weiterer mit einem Atmosphärendruckfühler verbunden sind, versehenen Recheneinrichtung verbunden ist, mittels welcher aus den einspeisbaren Meßwerten ein Ist-Wert ermittelbar, dieser mit einem vorgebbaren Soll-Wert vergleichbar und aus der Abweichung ein Stellwert ermittelbar ist, der an einem mit einem der Ventilator-Antriebseinrichtung zugeordneten Drehzahlsteller verbundenen Stellwert-Ausgang der Recheneinrichtung anliegt.

Diese Maßnahmen gewährleisten eine hohe Genauigkeit sowie eine ausgezeichnete Wirtschaftlichkeit. In vorteilhafter Weise werden hierbei die ventilatorteilinternen Druckfühler als Meßwertaufnehmer in die Regeleinrichtung einbezogen. Es ist daher in vorteilhafter Weise auch möglich, mit Hilfe dieser Druckfühler gewinnbare Gerätekennlinien des Ventilatorteils für die Regelung zu verwenden. Infolge des festen Einbaus der Druckfühler in das Ventilatorteil sind hier für alle Fälle gleiche, reproduzierbare Verhältnisse gewährleistet. Eine individuelle Anpassung an die Verhältnisse des Einzelfalls kann unterbleiben. Zudem ist sichergestellt, daß dynamische Druckkomponenten ohne Einfluß bleiben. Dadurch, daß neben der mit Hilfe des Ventilators erzeugbaren Druckdifferenz auch die Temperatur des Volumenstroms und der Atmosphärendruck vorzugsweise auch die Feuchtigkeit des Volumenstroms berücksichtigt werden, lassen sich hiervon herrührende Einflüsse ausschalten. Die Berücksichtigung dieser tatsächlichen Umgebungsbedingungen führt zu einer besonders hohen Genauigkeit. Ein weiterer Vorteil der erfindungsgemäßen Maßnahmen ist darin zu sehen, daß infolge der Verwendung ventilatorteilinterner Meßstellen praktisch keine Eingriffe in die Anlage bzw. in das Gebäude erforderlich sind. Vielmehr kann die erfindungsgemäße Regeleinrichtung bereits werksseitig kalibriert und praktisch steckerfertig zur Verfügung gestellt werden, was sich günstig auf den Herstellungs- und Montageaufwand sowie ebenfalls auf die Genauigkeit auswirkt.

Zur Schaffung einer Volumenstromregelung besitzt die Recheneinrichtung vorteilhaft auch einen mit einem dem Ventilator zugeordneten, vorzugsweise elektronischen Drehzahlfühler verbundenen Meßwerteingang. Die Recheneinrichtung kann dabei anhand der bekannten Gerätekennlinien den Volumenstrom ermitteln. Zweckmäßig kann die Recheneinrichtung dabei einen Speicher für die Kennlinien des Ventilatorteils enthalten, die vorteilhaft zumindest teilweise mittels der gattungsgemäßen Druckfühler auf einem Prüfstand ermittelbar sind.

Eine weitere vorteilhafte Maßnahme kann darin bestehen, daß die Recheneinrichtung ein Betriebsprogramm enthält, mittels dessen aus wenigstens einer mittels der gattungsgemäßen Druckfühler gemessenen Kennlinie weitere Kennlinien erzeugbar sind. Diese Maßnahme ermöglicht in vorteilhafter Weise eine stufenlose Regelung, ohne daß eine übertriebene Speicherkapazität erforderlich wäre.

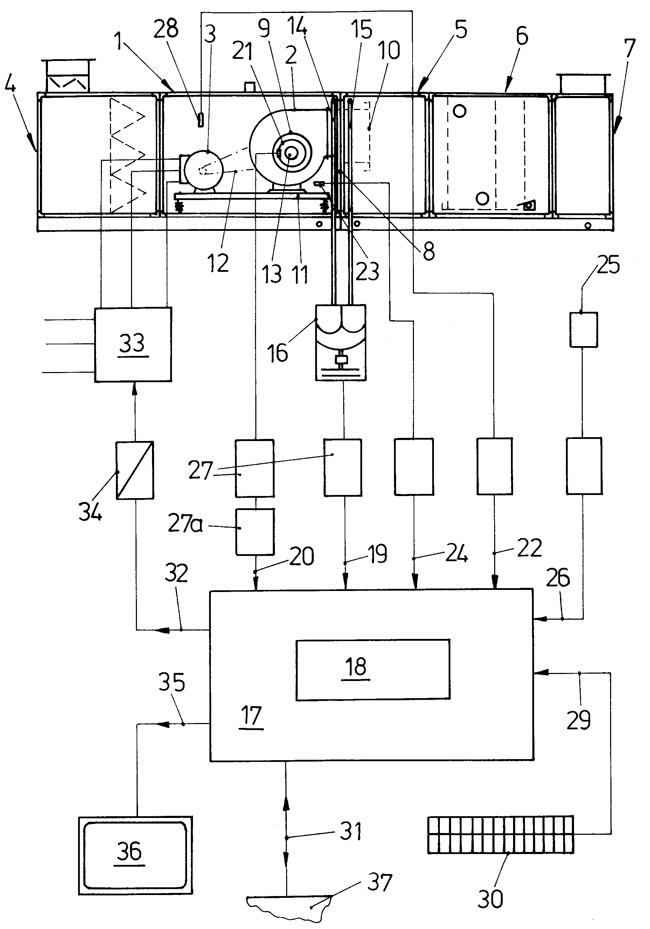

Nachstehend wird ein Ausführungsbeispiel der Erfindung anhand der Zeichnung näher erläutert. Die Zeichnung zeigt einen Signallaufplan einer Volumenstromregelung für eine raumlufttechnische Anlage.

Der Aufbau und die Wirkungsweise einer raumlufttechnischen Anlage sind an sich bekannt und bedürfen daher im vorliegenden Zusammenhang keiner näheren Erläuterung. Die der Zeichnung zugrundeliegende Anlage enthält als Kernstück ein Ventilatorteil 1 mit einem Ventilator 2 und einem diesem zugeordneten Antriebsmotor 3. Dem Ventilatorteil 1 sind ein Filterteil 4 vorgeordnet und ein Leerteil 5 sowie ein hieran sich anschließendes Kühlteil 6 und Ausströmteil 7 nachgeordnet.

Diese Komponenten besitzen jeweils einen tragenden Rahmen mit umlaufendem Mantel. Die aneinander anliegenden Stirnseiten der einzelnen Komponenten sind zur Bildung eines Strömungskanals offen. Lediglich im Bereich des Ventilatorteils 1 ist zur Trennung von Saug- und Druckseite des Ventilators 2 eine quer zur Strömungskanalachse angeordnete Druckwand 8 vorgesehen. Diese ist hier als im Bereich der ausgangsseitigen Stirnseite des Ventilatorteils 1 an dessen tragenden Rahmen angeflanschtes Blech ausgebildet. Die Druckwand 8 besitzt eine Ausnehmung, an der der Druckstutzen des Ventilators 2 endet oder die vom Druckstutzen durchgriffen sein kann. Der Eingangsquerschnitt 9 des Saugstutzens und der Ausgangsquerschnitt 10 des Druckstutzens des Ventilators 2 befinden sich dementsprechend in durch die Druckwand 8 voneinander getrennten, durch die Innenräume des Ventilatorteils 1 bzw. Leerteils 5 gebildeten Kammern.

Der Ventilator 2 und der zugeordnete Antriebsmotor 3 sind auf einer gemeinsamen, gefederten Palette 11 aufgenommen und durch ein Vorgelege 12, etwa in Form eines Riemenvorgeleges, antriebsmäßig miteinander verbunden. Das Übersetzungsverhältnis des Vorgeleges 12 und die Motordrehzahl sind dementsprechend maßgebend für die Drehzahl der koaxial zum Ansaugquerschnitt vorgesehenen Ventilatorwelle 13.

Dem Ventilatorteil 1 ist eine Regeleinrichtung zugeordnet, durch welche eine gewünschte Betriebsgröße, beispielsweise der erzeugbare Förderdruck oder der erzeugbare Luftvolumenstrom, geregelt werden kann. Im dargestellten Beispiel soll der Volumenstrom geregelt werden. Dieser ist in erster Linie abhängig von der Drehzahl des Ventilators 2, die ihrerseits von der Motordrehzahl und vom Übersetzungsverhältnis abhängt, sowie von der mit Hilfe des Ventilators 2 erzeugbaren Druckdifferenz. Diese Abhängigkeit ist anhand von Gerätekennlinien darstellbar, die von den Ventilatorkennlinien abweichen und daher für das Ventilatorteil 1 auf einem Prüfstand ermittelt werden müssen.

Hierzu sind auf beiden Seiten der Druckwand 8 den hier die Druckwand 8 durchdringenden Druckstutzen des Ventilators 2 umgreifende Druckfühler 14, 15 fest installiert, die jeweils über einen den äußeren Mantel des Ventilatorteils 1 bzw. Leerteils 5 durchdringenden Anschlußstutzen an eine Manometereinrichtung 16 angeschlossen sind. Mit Hilfe der Druckfühler 14, 15 wird die absolute Druckdifferenz zwischen den durch die Druckwand 8 voneinander getrennten Kammern gemessen. Die Druckfühler befinden sich hierbei im Tot-Wassergebiet, sodaß nur der statische Druck aufgenommen wird und dynamische Einflüsse entfallen.

Die Druckfühler 14, 15 sind als im Bereich der Peripherie der Druckwand 20 umlaufende, schleifenförmig gebogene Rohre oder vorzugsweise Schläuche ausgebildet, die mehrere, gleichmäßig über ihre Länge verteilte Eingänge in Form gebohrter Wandausnehmungen besitzen. Die die Druckfühler 14, 15 bildenden Ringleitungen sind dabei so dimensioniert, daß ihr lichter Querschnitt kleiner als 1% des Querschnitts der jeweils zugeordneten Kammer ist. Der Durchmesser der die Eingänge bildenden Bohrungen kann etwa 1 bis 3 mm betragen. Die die Druckfühler 14, 15 bildenden Ringkanäle können durch geeignete Schellen direkt an die Druckwand 8 befestigt sein.

Mit Hilfe der fest installierten Druckfühler 14, 15 lassen sich, wie schon erwähnt, auf einem Prüfstand für verschiedene Ventilatordrehzahlen Gerätekennlinien erzeugen, welche die Abhängigkeit von Volumenstrom und Druck bei der jeweils zugeordneten Drehzahl angeben. Diese auf einem Prüfstand ermittelbaren und für alle Ventilatorteile gleicher Bauweise und Größe gültigen Gerätekennlinien finden vor Ort zur Regelung hier des Volumenstroms Verwendung. Die hierzu vorgesehene Regeleinrichtung enthält als Kernstück eine Recheneinrichtung 17 mit einem Speicher 18, in den die Gerätekennlinien eingespeichert sind. Um die Speicherkapazität in Grenzen zu halten, kann die Recheneinrichtung 17 so ausgebildet sein, daß aus der gemessenen Kennlinie für eine Ventilatordrehzahl die Kennlinien für jede andere Ventilatordrehzahl rechnerisch erzeugbar sind. Dies läßt sich einfach mit Hilfe eines geeigneten Betriebsprogramms bewerkstelligen.

Die Recheneinrichtung 17 besitzt ferner einen Meßwerteingang 19 für die mittels der Druckfühler 14, 15 aufnehmbare Druckdifferenz und einen weiteren Meßwerteingang 20 für die Ventilatordrehzahl. Diese wird mittels eines Drehzahlfühlers 21 aufgenommen, der einfach als elektronischer, berührungslos arbeitender Drehzahlsensor ausgebildet sein kann. Die auf einem Prüfstand ermittelten, im Speicher 18 vorhandenen Gerätekennlinien beziehen sich auf Normbedingungen, d. h. eine vorgegebene Temperatur, Feuchtigkeit und einen vorgegebenen Atmosphärendruck. Um eine gute Regelungsgenauigkeit zu erreichen, werden Abweichungen dieser Randbedingungen von den Normwerten berücksichtigt. Hierzu ist im Ventilatorteil 1 ein Temperaturfühler 28 vorgesehen, der an einem weiteren, zugeordneten Meßwerteingang 22 der Recheneinrichtung 17 liegt. Ebenso ist im Ventilatorteil 1 ein Feuchtigkeitsfühler 23 vorgesehen, der an einem weiteren, zugeordneten Meßwerteingang 24 der Recheneinrichtung 17 liegt. Schließlich ist noch ein Atmosphärendruckfühler 25 vorgesehen, der an einem weiteren, zugeordneten Meßwerteingang 26 der Recheneinrichtung 17 liegt. Der Atmosphärendruckfühler 25 kann an der Außenseite des Ventilatorteils 1 angebracht sein.

Die Recheneinrichtung 17 wird über die genannten Meßwerteingänge mit zu den aufgenommenen Meßwerten analogen Spannungswerten versorgt. In den zu den Meßwerteingängen 19, 20, 22, 24, 26 führenden Signalleitungen sind dementsprechend geeignete Wandler 27 vorgesehen. Falls erforderlich, kann vor oder nach dem Wandler eine Meßwertaufbereitungseinrichtung 27a, etwa in Form einer Z-Diode, vorgesehen sein, wie anhand der dem Drehzahleingang 20 zugeordneten Signalleitung angedeutet ist.

Aus den eingegebenen Meßwerten von Druckdifferenz, Ventilatordrehzahl, Lufttemperatur, Luftfeuchtigkeit und Atmosphärendruck ermittelt die Recheneinrichtung 17 anhand der eingespeicherten Gerätekennlinien einen tatsächlich vorhandenen, d. h. auch unter Berücksichtigung der Lufttemperatur, Luftfeuchtigkeit und des Atmosphärendrucks korrigierten Volumenstrom. Dieser Ist-Wert, der permanent ermittelt wird, wird permanent mit einem vorgegebenen Soll-Wert verglichen. Auch dieser Vorgang wird von der Recheneinrichtung 17 durchgeführt. Diese ist dementsprechend mit einem Soll-Werteingang 29 versehen, der hier mittels einer Tastatur 30 bedienbar ist, über welche ein gewünschter Soll-Wert manuell eingebbar ist. Zusätzlich oder alternativ hierzu kann die Recheneinrichtung 17 auch mit einer zentralen Leitstelle 37 kommunizieren, wie durch die Kommunikationsleitung 31 angedeutet ist, über die ebenfalls Soll-Werte eingebbar sind. Aus der Regelabweichung, d. h. aus der Differenz zwischen Ist-Wert und Soll-Wert, ermittelt die Recheneinrichtung 17 einen Stellwert, der an einem Stellwertausgang 32 anliegt. Dieser Stellwert stellt hier ein Signal zur Veränderung der Ventilatordrehzahl dar. Im dargestellten Ausführungsbeispiel ist hierzu ein in der Stromversorgung des Antriebsmotors 3 angeordneter Drehzahlsteller 33 vorgesehen, der über den Stellwertausgang 32 ansteuerbar ist. Es wäre aber auch denkbar, zusätzlich oder alternativ hierzu mittels eines geeigneten Stellglieds das Übersetzungsverhältnis des Vorgeleges 12 zu verändern. Am Stellwertausgang 32 der Recheneinrichtung 17 liegt ein digitales Signal an. Dieses muß mittels eines dem Drehzahlsteller 33 vorgeordneten Digital-Analogwandlers in ein geeignetes Analogsignal umgesetzt werden. Im dargestellten Beispiel ist die Recheneinrichtung 17 mit einem weiteren Ausgang 35 zum Anschluß einer Anzeigeeinrichtung 36 versehen, durch welche die momentanen Werte der Regelgröße, hier des Volumenstroms, angezeigt werden können.

Die Recheneinrichtung 17 bildet praktisch den Regler der dem Ventilatorteil 1 zugeordneten Regeleinrichtung. Die Recheneinrichtung 17 kann zweckmäßig als Einplatinen-Microcomputer mit universeller Festprogrammierung (EMUF) ausgebildet sein.

**Patentansprüche**

1. Raumlufttechnische Anlage mit wenigstens einem einen Ventilator (2) und eine dessen Saug- und Druckseite voneinander trennende Druckwand (8) aufweisenden Ventilatorteil (1) und mit im Bereich beider Seiten der Druckwand (8) vorgesehenen Druckfühlern (14, 15), die an eine Manometereinrichtung (16) angeschlossen sind, **dadurch gekennzeichnet, daß** die Manometereinrichtung (16) mit einem Meßwerteingang (19) einer mit mehreren Meßwerteingängen (19, 20, 22, 24, 26), von denen zumindest einer mit einem Temperaturfühler (28) und einer mit einem Atmosphärendruckfühler (25) verbunden sind, versehenen Recheneinrichtung (17) verbunden ist, mittels welcher aus den einspeisbaren Meßwerten ein Ist-Wert ermittelbar, dieser mit einem vorgebbaren Soll-Wert vergleichbar und aus der Abweichung ein Stellwert ermittelbar ist, der an einem mit einem der Ventilator-Antriebseinrichtung zugeordneten Drehzahlsteller (33) verbundenen Stellwert-Ausgang (32) anliegt.

2. Anlage nach Anspruch 1, **dadurch gekennzeichnet, daß** die Recheneinrichtung (17) mit einem mit einem Feuchtigkeitsfühler (23) verbundenen Meßwerteingang (24) versehen ist.

3. Anlage nach einem der vorhergehenden Ansprüche, **dadurch gekennzeichnet, daß** die Recheneinrichtung (17) bei einer Volumenstromregelung einen mit einem dem Ventilator (2) zugeordneten, vorzugsweise elektronischen Drehzahlfühler (21) verbundenen Meßwerteingang (20) aufweist.

4. Anlage nach einem der vorhergehenden Ansprüche, **dadurch gekennzeichnet, daß** die Recheneinrichtung (17) einen Speicher (18) für die Kennlinien des Ventilatorteils (1), die zumindest teilweise mittels der die Druckwand (8) flankierenden Druckfühler (14, 15) ermittelbar sind, und vorzugsweise ein Betriebsprogramm enthält, mittels dessen aus wenigstens einer mittels der die Druckwand (8) flankierenden Druckfühler (14, 15) gemessenen Kennlinie weitere Kennlinien erzeugbar sind.

5. Anlage nach einem der vorhergehenden Ansprüche, **dadurch gekennzeichnet, daß** die Recheneinrichtung (17) ein Betriebsprogramm enthält, mittels dessen die Abweichungen der mittels des Temperaturfühlers (28) gemessenen Temperatur, des mittels des Atmosphärendruckfühlers (25) gemessenen Atmosphärendrucks und vorzugsweise der mittels des Feuchtigkeitsfühlers (23) gemessenen Feuchtigkeit von den den gespeicherten Kennlinien zugrundeliegenden Normbedingungen ausgleichbar sind.

6. Anlage nach einem der vorhergehenden Ansprüche, **dadurch gekennzeichnet, daß** sämtliche Meßwertaufnehmer im oder am Ventilatorteil (1) angeordnet bzw. angebracht sind.

7. Anlage nach einem der vorhergehenden Ansprüche, **dadurch gekennzeichnet, daß** die Recheneinrichtung (17) einen mit einer Tastatur (30) verbundenen Soll-Werteingang (29) aufweist.

8. Anlage nach einem der vorhergehenden Ansprüche, **dadurch gekennzeichnet, daß** die Recheneinrichtung (17) mittels einer Kommunikationsleitung (31) mit einem zentralen Leitstand (37) verbunden ist und vorzugsweise einen mit einer Anzeigeeinrichtung (36) verbundenen Ausgang (35) aufweist.

9. Anlage nach einem der vorhergehenden Ansprüche, **dadurch gekennzeichnet, daß** der Drehzahlsteller (33), dem ein Digital-Analog-Wandler (34) vorgeordnet ist, in der dem Antriebsmotor (3) zugeordneten Stromversorgung angeordnet ist.

10. Anlage nach einem der vorhergehenden Ansprüche, **dadurch gekennzeichnet, daß** die Recheneinrichtung (17) als Microcomputer, vorzugsweise in Form eines Einplatinen-Computers mit universeller Festprogrammierung ausgebildet ist.

| | **EINSCHLÄGIGE DOKUMENTE** | | EP 92103205.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| A | <u>DE - A - 3 703 401</u><br>(AL-KO POLAR)<br>   * Fig. 1; Ansprüche 6-9 *<br>-- | 1,3-8, 10 | F 24 F 11/04 |
| A | <u>DE - A - 3 036 298</u><br>(BORG-WARNER)<br>   * Fig. 1; Anspruch 1 *<br>-- | 1,2,4, 5,9,10 | |
| A | <u>GB - A - 2 207 234</u><br>(HUNTER INTERNATIONAL)<br>   * Fig.; Zusammenfassung *<br>---- | 1,2 | |
| | | | **RECHERCHIERTE SACHGEBIETE (Int. Cl.⁵)**<br><br>F 14 F<br>G 05 D |
| | Der vorliegende Recherchenbericht wurde für alle Patentansprüche erstellt. | | |

| Recherchenort | Abschlußdatum der Recherche | Prüfer |
|---|---|---|
| WIEN | 13-04-1992 | MEISTERLE |